(19) **Europäisches Patentamt**
**European Patent Office**
**Office européen des brevets**

(11) **EP 1 798 413 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(51) Int Cl.:
*F03D 7/04* (2006.01)

(21) Anmeldenummer: **06023395.4**

(22) Anmeldetag: **10.11.2006**

(54) **Verfahren zur Momenten- und Pitchsteuerung für eine Windenergieanlage abhängig von der Drehzahl**

Method for moments and pitch control as function of rotational speed in a Wind turbine

Méthode pour la régulation des moments et de l'incidence d'une éolienne selon la vitesse de rotation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.12.2005 DE 102005059888**

(43) Veröffentlichungstag der Anmeldung:
**20.06.2007 Patentblatt 2007/25**

(73) Patentinhaber: **NORDEX Energy GmbH**
**22848 Norderstedt (DE)**

(72) Erfinder:
• **Kabatzke, Wolfgang, Dr.-Ing.**
**21502 Geesthacht (DE)**
• **Richter, Kay**
**22846 Norderstedt (DE)**
• **Schubert, Thomas**
**25479 Ellerau (DE)**

(74) Vertreter: **Hauck Patent- und Rechtsanwälte**
**Neuer Wall 50**
**20354 Hamburg (DE)**

(56) Entgegenhaltungen:
**US-A- 4 703 189**

• **MULJADI E ET AL: "Pitch-controlled variable-speed wind turbine generation" INDUSTRY APPLICATIONS CONFERENCE, 1999. THIRTY-FOURTH IAS ANNUAL MEETING. CONFERENCE RECORD OF THE 1999 IEEE PHOENIX, AZ, USA 3-7 OCT. 1999, PISCATAWAY, NJ, USA,IEEE, US, Bd. 1, 3. Oktober 1999 (1999-10-03), Seiten 323-330, XP010355180 ISBN: 978-0-7803-5589-7**
• **VAN DER HOOFT E L ET AL: "Wind turbine control algorithms" ECN LITERATURE REVIEW, XX, XX, Bd. ECN-C-03-111, 1. Dezember 2003 (2003-12-01), Seiten 1-89, XP003008410**
• **BOSSANYI E A: "The Design of Closed Loop Controllers forWind Turbines" WIND ENERGY, WILEY, Bd. 3, Nr. 3, 1. Januar 2000 (2000-01-01), Seiten 149-163, XP007908706 ISSN: 1095-4244 [gefunden am 2001-07-19]**
• **BOSSANYI E A: "Wind Turbine Control for Load Reduction" WIND ENERGY, WILEY, CHICHESTER, GB, Bd. 6, 1. Januar 2003 (2003-01-01), Seiten 229-244, XP007909578 ISSN: 1099-1824**

**Beschreibung**

Die vorliegende Erfindung betrifft ein Verfahren zur Momenten- und Pitchsteuerung/-regelung für eine Windenergieanlage abhängig von der Drehzahl. Das Verfahren dient zur Bestimmung eines optimalen Sollwerts für das Generatormoment abhängig von der Drehzahl für eine pitchgeregelte Windenergieanlage.

Die Windenergieanlage wird von der Betriebsführung bei Wind ab einer Anlaufwindgeschwindigkeit hochgefahren und bei großer Windgeschwindigkeit, der Abschaltwindgeschwindigkeit, wieder abgeschaltet, um eine mechanische Überlastung zu verhindern. Die Windgeschwindigkeit wird beispielsweise über ein Anemometer ermittelt oder aus der Drehzahl des Rotors und der abgegebenen Leistung berechnet.

Drehzahlvariable, pitchgeregelte Windenergieanlagen sind bekannt. Bei der Pitchregelung wird jedes Rotorblatt um seine Längsachse in seinem Blattanstellwinkel verstellt. Bei unterschiedlichen Blattanstellwinkeln nimmt das Rotorblatt jeweils ein anderes Moment aus dem Wind auf.

Für die Steuerung/Regelung der Windenergieanlagen ist bekannt, zwischen zwei Betriebsmodi zu unterscheiden. Der erste Betriebsmodus wird als Teillastbetrieb bezeichnet, in dem über die Vorgabe eines Drehmoments eine Drehzahlregelung erfolgt. Der zweite Betriebsmodus ist der Volllastbetrieb, in dem eine Drehzahlregelung über ein Verstellen des Anstellwinkels erfolgt.

Um eine optimale Leistungausbeute mit der Windenergieanlage zu erzielen, wird die Drehzahl der Anlage im Teillastbereich auf das optimale Verhältnis zwischen Umfangsgeschwindigkeit des Rotors und Windgeschwindigkeit eingestellt ($\lambda_{opt}$). Die Rotorblätter sind dabei auf einen Blattwinkel eingestellt, der das höchste Antriebsmoment für die Rotorwelle erzeugt. Die Drehzahl des Rotors wird im Teillastbereich über das am Generator und/oder Umrichter erzeugte Gegenmoment eingestellt.

Ist bei der Nennwindgeschwindigkeit das maximale Gegenmoment am Generator erreicht, so kann durch weiteres Erhöhen des Generatormoments die Drehzahl nicht länger in dem Arbeitspunkt gehalten werden. Eine Überlastung des Systems wird dann vermieden, indem der aerodynamische Wirkungsgrad der Blätter verschlechtert wird und diese aus dem optimalen Anstellwinkel herausgefahren werden. Dieser Vorgang wird fachsprachlich auch als "pitchen" bezeichnet. Die Drehzahl des Rotors wird somit nach Erreichen des maximalen Generatormoments über den Anstellwinkel der Blätter beeinflußt.

Aus EP 1 007 844 B 1 ist eine geschwindkeitsvariable Windenergieanlage bekannt, die einen Induktionsgenerator mit gewickeltem Rotor besitzt. Zur Betriebsführung ist bei der bekannten Windenergieanlage eine Drehmomentsteuerung und eine Steuerung für den Anstellwinkel bekannt, die unabhängig von der Drehmomentsteuerung arbeitet.

Aus E. Muljadi et al. "Pitch-Controlled Variable-Speed Wind Turbine Generation", Industry Applications Conference, 1999, Thirty-Fourth IAS Annual Meeting, Conference Record of the 1999 IEEE Phoenix, Az., USA, 3-7 Oct. 1999, Piscataway NJ, USA, IEEE, US, Bd. 1, Seiten 323 - 330 ist ein Steuerverfahren für eine Windenergieanlage bekannt, bei dem ein Leistungssollwert abhängig von einer Drehzahl vorgegeben ist. Die Vorgabe erfolgt so, dass zwischen Teillastbetrieb und Volllastbetrieb ein Sprung in dem Sollwert für die Leistung erfolgt. Alternativ zu dem sprunghaften Übergang wird ein stetiger Übergang aus dem Teillastbetrieb in den Volllastbetrieb vorgeschlagen.

Aus van der Hooft et al. "Wind Turbine Control Algorithms", ECN Literature Review, Bd. ECN-C-03-111, Seiten 1 - 89 ist bekannt, für Nennwind die Leistungsausbeute der Windenergieanlage zu optimieren, indem eine Leistungabsenkung abhängig von der Drehzahl in zwei Stufen erfolgt.

Der Erfindung liegt die technische Aufgabe zugrunde, ein Verfahren zur Moment- und Pitchsteuerung für eine Windenergieanlage abhängig von der Drehzahl bereitzustellen, das eine besonders hohe Ausbeute liefert.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren dient zur Steuerung von Drehmoment und Anstellwinkel abhängig von der Drehzahl. Die Steuerung erfolgt hierbei gemäß einer vorgegebenen Kennlinie. Die Kennlinie gibt abhängig von einer Drehzahl für den Rotor einen Sollwert für das Generatormoment vor, also einen Sollwert für das an dem Generator anliegende Moment. Der Sollwert wird durch eine entsprechende Steuerung dann für den Generator eingestellt oder eingeregelt. Die Steuerung ändert, um den gewünschten Sollwert zu erzielen, sowohl die vom Generator aufgenommene Leistung als auch den Anstellwinkel der Rotorblätter. Die Steuerung kann auch als Regelung ausgebildet sein. Im Teillastbetrieb an der Windenergieanlage erfolgt in einem ersten Abschnitt eine Momentenregelung bis zu einer ersten Drehzahl ($n_1$). An den ersten Abschnitt schließt sich der zweite Abschnitt an, bei dem ebenfalls im Teillastbetrieb eine Momentenregelung von der ersten vorbestimmten Drehzahl ($n_1$) bis zu der zweiten Drehzahl ($n_2$) erfolgt. Im Volllastbetrieb erfolgt in einem dritten Abschnitt eine Pitchregelung für Drehzahlen, größer als die zweite Drehzahl ($n_2$). In einem vierten Abschnitt erfolgt im Volllastbetrieb ebenfalls eine Pitchregelung für Drehzahlen größer als eine dritte Drehzahl ($n_3$) und kleiner als die zweite Drehzahl ($n_2$). In einem fünften Abschnitt erfolgt eine Momentenregelung im Teillastbetrieb für Drehzahlen kleiner als die dritte Drehzahl ($n_3$), wenn zuvor eine Steuerung gemäß dem vierten Abschnitt der Kennlinie erfolgt ist. Das erfindungsgemäße Verfahren besitzt im Teillastbetrieb eine Momentenregelung, die nur angesteuert wird, wenn zuvor eine Steuerung gemäß dem vierten Abschnitt erfolgte. Bei dem erfindungsgemäßen Verfahren erfolgt also im Volllastbetrieb in einem Drehzahlbereich zwischen der zweiten Drehzahl ($n_2$) und der dritten Drehzahl ($n_3$) weiterhin eine Pitchregelung anstatt in den Teillastbetrieb zu wechseln. Fällt die Drehzahl des Rotors weiter ab, erfolgt im Teillastbetrieb eine Momentenregelung gemäß dem fünften Abschnitt, wobei bevorzugt bei Erreichen eines minimalen Anstellwinkels die Steuerung linear in den zweiten oder ersten Abschnitt zurückkehrt.

Erfindungsgemäß erfolgt die Steuerung in dem vierten Abschnitt der Kennlinie, wenn die Anstellwinkel der Rotorblätter einen vorbestimmten Wert übersteigen. Bei dem erfindungsgemäßen Verfahren wird also im Volllastbetrieb bei einer Drehzahl zwischen $n_2$ und $n_3$ überprüft, ob ein vorbestimmter Mindestanstellwinkel überschritten wird. Wird der Anstellwinkel überschritten, so ist noch genügend kinetische "Energie" in dem Rotorblatt vorhanden, um ein sofortiges Zurückfahren in den Teillastbetrieb zu vermeiden. Es erfolgt also weiterhin auch bei Drehzahlen kleiner als die zweite Drehzahl $n_2$ eine Regelung des Anstellwinkels. Die Kennlinie verzweigt zum vierten Abschnitt. Bevorzugt ist der Mindestanstellwinkel größer als 0,5° und kleiner als 5°. In einer besonders bevorzugten Ausgestaltung besitzt der Anstellwinkel eine Größe zwischen 1 ° und 3°.

Liegt für Drehzahlen kleiner als $n_2$ noch ein ausreichend großer Anstellwinkel vor, so verbleibt die Steuerung im Volllastbetrieb und es erfolgt eine Verstellung des Anstellwinkels, dann kehrt die Steuerung in den Teillastbetrieb zurück. Hierzu wird bevorzugt das Drehmoment reduziert und die Drehzahl erhöht bis eine Drehzahl aus dem zweiten Abschnitt vorliegt. Die Kennlinie, mit der aus dem Volllastbetrieb mit den vierten und fünften Kennlinienabschnitten in den zweiten Kennlinienabschnitt für die Teillast zurückgefahren wird, sei nachfolgend als sechster Kennlinienabschnitt bezeichnet.

Die Fortsetzung des Volllastbetriebs in dem vierten Abschnitt der Kennlinie bietet den Vorteil, daß erst später in den Teillastbetrieb zurückgeschaltet und somit die Windenergieanlage länger bei Volllast betrieben wird.

Bei dem erfindungsgemäßen Verfahren wird in dem ersten Abschnitt der Kennlinie das Moment mit steigender Drehzahl erhöht, bis die Drehzahl einen vorbestimmten Drehzahlwert $n_1$ erreicht hat. Bevorzugt steigt in dem zweiten Abschnitt der Kennlinie das Moment mit steigender Drehzahl stärker als in dem ersten Abschnitt. Im dritten Abschnitt erfolgt die Regelung auf einen konstanten Wert für das Drehmoment. Ab einer fünften Drehzahl $n_5$ wird zweckmäßiger Weise bei zunehmender Drehzahl eine Abnahme des Drehmoments angesteuert. Durch die Abnahme des Drehmoments wird eine Überlastung der Windenergieanlage bei großen Drehzahlen verhindert.

Bevorzugt erfolgt in dem vierten Abschnitt der Kennlinie eine Regelung des Anstellwinkels auf einen im wesentlichen konstanten Momentwert. Zweckmäßigerweise steigt das Drehmoment in dem fünften Abschnitt der Kennlinie stärker als im ersten Abschnitt der Kennlinie, so daß die Windenergieanlage mit einer kleinen Drehzahl aus dem Volllastbetrieb zurück zur ersten Kennlinie geführt werden kann. Das Steigen der Kennlinie in dem zweiten Abschnitt, was eine große Momenterhöhung bei geringfügiger Zunahme der Drehzahl bedeutet, dient dem Zweck, nach einem Anfahren möglichst schnell über den Teillastbetrieb hinweg in den Volllastbetrieb zu gelangen, um die Windenergieanlage so früh wie möglich im Volllastbetrieb fahren zu können.

Bei dem erfindungsgemäßen Verfahren ist die dritte Drehzahl $n_3$ größer und die vierte Drehzahl $n_4$ kleiner als die erste Drehzahl $n_1$.

Das erfindungsgemäße Verfahren wird nachfolgend anhand einer Figur näher erläutert.

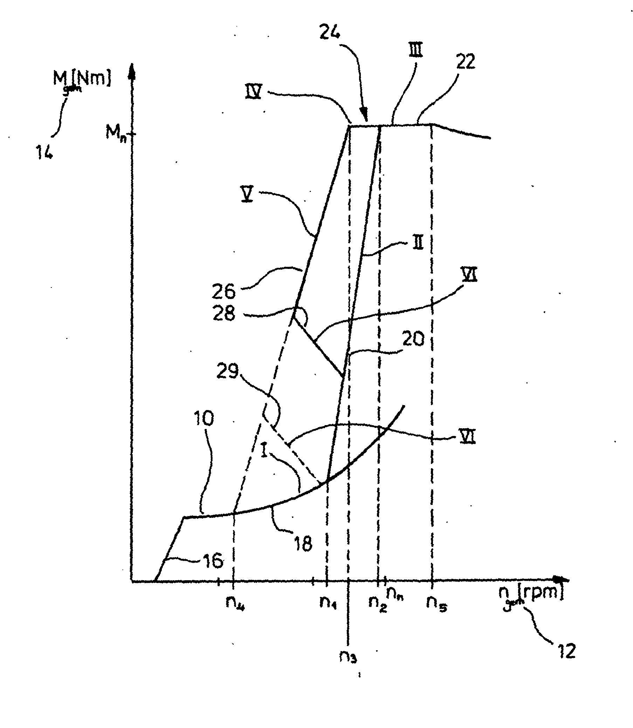

Die einzige Figur zeigt ein Kennlinienfeld für das Regelverhalten einer Windenergieanlage mit einer Kennfeldregelung. Die Kennfeldregelung besitzt einen mit 10 gekennzeichneten ersten Abschnitt, in dem das Generatormoment 14 über der Generatordrehzahl 12 aufgetragen ist. In einem ersten Anlaufabschnitt 16 des Kennlinienabschnitts 10 steigt das Generatormoment linear mit der Drehzahl. Hieran schließt sich ein zweiter Teil 18 des ersten Abschnitts an, in dem das Drehmoment nicht linear der Drehzahl folgt. Das Drehmoment steigt hierbei bis zu einem ersten Drehzahlwert $n_1$. In dem zweiten Teil des ersten Abschnitts der Kennlinie erfolgt eine Regelung des Generatormoments gemäß der idealen Kennlinie für die aus dem Wind aufgenommene Leistung. Der mathematische Zusammenhang zwischen Drehzahl und Leistung ergibt sich aus folgender Formel:

$$P_{Aero} = \left[ 2 \cdot \pi \cdot r_{rot} \cdot \frac{n_{gen}}{\ddot{u}_{getr}} \cdot \frac{1}{60} \cdot \frac{1 \cdot}{\lambda(n_{rot})} \right]^3 \cdot \pi \cdot r_{rot}^2 \cdot \frac{\rho_{luft}}{2} \cdot c_p(n_{rot})$$

wobei $r_{rot}$ für den Radius des Rotorblatts steht, $n_{gen}$ für die Generatordrehzahl, $\ddot{u}_{getr}$ für das Übersetzungsverhältnis des Getriebes steht. $\lambda(n_{rot})$ bezeichnet die Schnelllaufzahl des Rotors abhängig von der Drehzahl es Rotors, $\rho_{luft}$ bezeichnet die Dichte der Luft, während $c_p(n_{rot})$ einen Leistungsbeiwert für das Rotorblatt abhängig von der Drehzahl des Rotors beschreibt.

Der vorstehende Zusammenhang für die Leistung kann je nach technischer Ausgestaltung der Steuerung fortlaufend berechnet werden oder abhängig von der Drehzahl in einer Tabelle hinterlegt sein. Die Verwendung des physikalischen Zusammenhangs zwischen aus der Wind aufgenommener Leistung und der Generatorleistung stellt sicher, daß im Bereich zwischen den Drehzahlwerten von $n_4$ und $n_1$ stets die maximale Leistungsausbeute angesetzt wird.

Der zweite Kennlinienabschnitt 20 schließt sich an den ersten Drehzahlwert an. In dem zweiten Abschnitt 20 der Kennlinie erfolgt ein rascher Anstieg des Drehmoments auf den Nennwert $M_n$ für das Drehmoment. Die Drehzahl steigt hierbei von dem Wert $n_1$ auf den zweiten Drehzahlwert $n_2$. Die zweite Drehzahl $n_2$ kann hierbei gleich oder kleiner als eine Nenndrehzahl $n_n$ für die Windenergieanlage sein. In einem anschließenden Abschnitt 22 der Kennlinie liegt der Volllastbetrieb vor, in dem eine Regelung über den Pitchwinkel erfolgt. Der dritte Kennlinienabschnitt 22 gilt für Drehzahlen oberhalb von $n_2$. Oberhalb einer fünften Drehzahl $n_5$ wird durch die Pitchregelung das an dem Rotor anliegende Moment reduziert. Die Leistung der Windenergieanlage ist proportional zu dem Moment und der Drehzahl, so daß oberhalb von $n_5$ mit dem dritten Abschnitt der Kennlinie eine Leistungsreduzierung erfolgt.

An den dritten Abschnitt 22 der Kennlinie schließt sich der vierte Abschnitt 24 der Kennlinie an. Der zugehörige Drehzahlbereich wird durch die Drehzahlwerte $n_2$ und $n_3$ gekennzeichnet. In dem vierten Abschnitt der Kennlinie erfolgt weiterhin ein Volllastbetrieb, obwohl beim Anfahren der Anlage mit diesen Drehzahlen noch kein Volllastbetrieb erfolgte.

Bei einem über den Wert $n_3$ hinausgehenden Abfall der Drehzahl wird das Drehmoment entlang dem fünften Abschnitt der Kennlinie reduziert. Der Abfall erfolgt im wesentlichen linear. Bei dem Drehzahlwert $n_4$ kehrt die Kennlinie an den ersten Kennlinienabschnitt 10 zurück. Der Drehzahlwert $n_4$ wird entlang dem fünften Kennlinienabschnitt allerdings nur theoretisch erreicht, da im vierten und fünften Kennlinienabschnitt ständig überprüft wird, ob der Anstellwinkel des Rotorblatts noch einen vorgegebenen Minimalwert, beispielsweise 2° übersteigt. Wird der Minimalwert für den Anstellwinkel nicht überschritten, ist also im Volllastbetrieb der Anstellwinkel inzwischen so weit gesunken, daß er kleiner als der Minimalwert ist, so fährt die Steuerung entlang einem sechsten Kennlinienabschnitt 28 oder 29 zurück bis wieder Werte aus dem ersten bzw. zweiten Kennlinienabschnitt erreicht sind. Der fünfte Kennlinienabschnitt bildet also die Einhüllende der Linienwerte, von denen ausgehend die Steuerung über den sechsten Kennlinienabschnitt 28 aus dem Volllastbetrieb in den Teillastbetrieb zurückkehrt. Anders als die anderen Kennlinienabschnitte ist der sechste Kennlinienabschnitt in seiner absoluten Lage nicht festgelegt, sondern durch seine negative Steigung und seinen Startpunkt auf dem fünften Kennlinienabschnitt definiert. Der Startpunkt auf dem fünften Kennlinienabschnitt ist durch den Minimalwert für den Anstellwinkel definiert. In der Figur sind beispielhaft zwei Kennlinienäste 28 und 29 dargestellt, entlang denen ein Zurückfahren in den Teillastbetrieb erfolgt.

Das bei dem erfindungsgemäßen Verfahren eingesetzte Kennlinienfeld besitzt eine Hysterese, die zu einer besseren Leistungsausbeute durch die Windenergieanlage führt. Wichtig hierbei ist der Übergang von dem dritten Kennlinienfeldabschnitt 22 zum vierten Kennlinienfeldabschnitt 24. Hierzu wird definiert, daß die Steuerung gemäß dem vierten Kennlinienfeldabschnitt 24 dann erfolgt, wenn für eine Drehzahl aus dem Intervall $[n_3, n_2]$ ein Verstellwinkel vorliegt, der größer als ein definierter Mindestwinkel ist. Bevorzugt wird ein Mindestwinkel von 2° definiert. Ist also bei einem Abfallen der Drehzahl noch ein Anstellwinkel von 2° oder mehr vorhanden, so kehrt die Steuerung nicht, wie bei einer reinen Drehzahlsteuerung, in den zweiten Abschnitt 20 des Kennlinienfeldes zurück, sondern verbleibt im Volllastbetrieb und wechselt in den vierten Abschnitt. Hintergrund hierfür ist, daß das System die in der Bewegung des Rotors gespeicherte kinetische Energie einsetzt, um weiterhin ein maximales Moment zu erzeugen. Erst wenn eine untere Grenze für den Volllastbetrieb $n_3$ erreicht wurde, kehrt die Steuerung in den Teillastbetrieb gemäß dem fünften Abschnitt zurück, indem das Moment reduziert wird. Der Minimalwert für den Anstellwinkel für die Rückkehr in den Teillastbetrieb ist nicht unbedingt identisch mit dem Mindestwinkel, der für die Verzweigung in den vierten Kennlinienabschnitt vorgesehen ist.

## Patentansprüche

1. Verfahren zur Moment- und Pitchsteuerung/-regelung für eine Windenergieanlage abhängig von der Drehzahl gemäß einer Kennlinie, bei der

   - im Teillastbetrieb in einem ersten Abschnitt (10) eine Momentenregelung bis zu einer ersten vorbestimmten Drehzahl ($n_1$) erfolgt,
   - im Teillastbetrieb in einem zweiten Abschnitt (20) eine Momentenregelung von der ersten Drehzahl ($n_1$) bis zu einer zweiten Drehzahl ($n_2$) erfolgt,
   - im Volllastbetrieb in einem dritten Abschnitt (22) eine Verstellung eines Anstellwinkels mindestens eines Rotorblatts für Drehzahlen größer als die zweite Drehzahl ($n_2$) erfolgt, und **dadurch gekennzeichnet, dass**
   - im Volllastbetrieb in einem vierten Abschnitt (24) eine Verstellung des Anstellwinkels für Drehzahlen kleiner als die zweite Drehzahl ($n_2$) und größer als die dritte Drehzahl ($n_3$) erfolgt, wenn zuvor eine Steuerung gemäß dem dritten Abschnitt (22) erfolgte und der Anstellwinkel der Rotorblätter im Volllastbetrieb einen vorbestimmten Mindestwert übersteigt,
   - und im Teillastbetrieb in einem fünften Abschnitt (26) eine Momentenregelung für Drehzahlen kleiner als die dritte Drehzahl ($n_3$) erfolgt, wenn zuvor eine Steuerung gemäß dem vierten Abschnitt (24) erfolgte.

**2.** Verfahren nach Anspruch 1, **dadurch gekennzeichnet, daß** im vierten und fünften Abschnitt (26) der Kennlinie bei Unterschreiten eines minimalen Anstellwinkels die Steuerung über einen sechsten Kennlinienabschnitt (28; 29) in den ersten oder zweiten Kennlinienabschnitt (18, 20) zurückkehrt.

**3.** Verfahren nach Anspruch 2, **dadurch gekennzeichnet, daß** in dem sechsten Kennlinienabschnitt (28; 29) das Moment abhängig von der Drehzahl reduziert wird.

**4.** Verfahren nach einem der Ansprüche 1 bis 3, **dadurch gekennzeichnet, daß** der vorbestimmte Mindestwert für den Anstellwinkel größer als 0,5° und kleiner als 5° ist.

**5.** Verfahren nach Anspruch 4, **dadurch gekennzeichnet, daß** der vorbestimmte Wert für den Anstellwinkel größer als 1° und kleiner als 3° ist.

**6.** Verfahren nach einem der Ansprüche 1 bis 5, **dadurch gekennzeichnet, daß** in dem ersten Abschnitt (10) der Kennlinie das Moment mit der Drehzahl steigt, bis die Drehzahl einen vorbestimmten Drehzahlwert ($n_1$) erreicht hat.

**7.** Verfahren nach einem der Ansprüche 1 bis 6, **dadurch gekennzeichnet, daß** in dem zweiten Abschnitt (20) der Kennlinie das Moment mit der Drehzahl schneller steigt als im ersten Abschnitt.

**8.** Verfahren nach einem der Ansprüche 1 bis 7, **dadurch gekennzeichnet, daß** in dem dritten Abschnitt bis zu einer vorbestimmten Drehzahl ($n_5$) eine Regelung auf einen konstanten Wert des Drehmoments erfolgt.

**9.** Verfahren nach Anspruch 8, **dadurch gekennzeichnet, daß** in dem dritten Abschnitt der Kennlinie ab der Drehzahl ($n_5$) bei zunehmender Erhöhung der Drehzahl das Drehmoment abnimmt.

**10.** Verfahren nach einem der Ansprüche 1 bis 9, **dadurch gekennzeichnet, daß** in dem fünften Abschnitt (26) der Kennlinie das Drehmoment mit der Drehzahl schneller steigt als im ersten Abschnitt (10).

**11.** Verfahren nach einem der Ansprüche 1 bis 10, **dadurch gekennzeichnet, daß** die dritte Drehzahl ($n_3$) kleiner als die zweite Drehzahl ($n_2$) ist.

**Claims**

**1.** Method for torque and pitch control/adjustment for a wind power plant depending on the rotational speed according to a characteristic curve,

> • at partial load operation in a first section (10), torque control is performed up to a first predetermined rotational speed ($n_1$)
> • at partial load operation in a second section (20), torque control is performed from the first rotational speed ($n_1$) up to a second rotational speed ($n_2$),
> • at full load operation in a third section (22), a pitch angle of at least one rotor blade is adjusted for rotational speeds greater than the second rotational speed ($n_2$),

**characterized in that**

> • at full load operation, in a fourth section (24), the pitch angle is adjusted at rotational speeds lower than the second rotational speed ($n_2$) and greater than the third rotational speed ($n_3$), if a control has been previously performed according to the third section (22) and if the pitch angle of the rotor blades exceeds a predetermined minimum value at full load operation,
> • and at partial load operation in a fifth section (26) torque control is performed for rotational speeds lower than the third rotational speed ($n_3$), if a control has been previously performed according to the fourth section (24).

**2.** Method according to claim 1, **characterized in that** in the fourth and fifth sections (26) of the characteristic curve, when dropping below a minimum pitch angle, the control system returns via a sixth characteristic curve section (28; 29) to the first or second characteristic curve section (18, 20).

**3.** Method according to claim 2, **characterized in that** in the sixth characteristic curve section (28; 29) the torque is reduced depending on the rotational speed.

4. Method according to any of the claims 1 to 3, **characterized in that** the predetermined minimum value for the pitch angle is greater than 0.5° and lower than 5°.

5. Method according to claim 4, **characterized in that** the predetermined value for the pitch angle is greater than 1 ° and lower than 3°.

6. Method according to any of the claims 1 to 5, **characterized in that** in the first section (10) of the characteristic curve, the torque rises with the rotational speed, until the rotational speed has reached a predetermined rotational speed value ($n_1$).

7. Method according to any of the claims 1 to 6, **characterized in that** in the second section (20) of the characteristic curve, the torque rises more rapidly with the rotational speed than in the first section.

8. Method according to any of the claims 1 to 7, **characterized in that** in the third section, up to a predetermined rotational speed ($n_5$), a control is performed to a constant value of the torque.

9. Method according to claim 8, **characterized in that** in the third section of the characteristic curve, beginning at the rotational speed ($n_5$), the torque decreases with a further increase of the rotational speed.

10. Method according to any of the claims 1 to 9, **characterized in that** in the fifth section (26) of the characteristic curve, the torque rises more rapidly with the rotational speed than in the first section (10).

11. Method according to any of the claims 1 to 10, **characterized in that** the third rotational speed ($n_3$) is lower than the second rotational speed ($n_2$).

**Revendications**

1. Méthode pour la commande/régulation des moments et de l'incidence d'une éolienne selon la vitesse de rotation selon une caractéristique

- en mode de charge partielle dans un premier segment (10) a lieu une régulation des moments jusqu'à une première vitesse de rotation prédéfinie ($n_1$),
- en mode de charge partielle dans un deuxième segment (20) a lieu une régulation des moments de la première vitesse de rotation ($n_1$) à une deuxième vitesse de rotation ($n_2$),
- en mode de charge complète dans un troisième segment (22) a lieu un réglage un angle d'attaque d'au moins une pale de rotor pour des vitesses de rotation supérieures à la deuxième vitesse de rotation (n2), et **caractérisée en ce que**
- en mode de charge complète dans un quatrième segment (24) a lieu un réglage de l'angle d'attaque pour des vitesses de rotation inférieures à la deuxième vitesse de rotation ($n_2$) et supérieures à la troisième vitesse de rotation ($n_3$), lorsqu'une commande selon le troisième segment (22) a lieu auparavant et lorsque l'angle d'attaque des pales de rotor en mode de pleine charge dépasse une valeur minimale prédéfinie,
- et en mode de charge partielle dans un cinquième segment (26) a lieu une régulation des moments pour des vitesses de rotation inférieures à la troisième vitesse de rotation ($n_3$), lorsqu'une commande a lieu auparavant selon le quatrième segment (24).

2. Méthode selon la revendication 1, **caractérisée en ce que** dans les quatrième et cinquième segments (26) de la caractéristique lors du dépassement en dessous d'un angle d'attaque minimal, la commande via un sixième segment de caractéristique (28 ; 29) revient dans le premier ou deuxième segment caractéristique (18, 20).

3. Méthode selon la revendication 2, **caractérisée en ce que** dans le sixième segment de caractéristique (28 ; 29) le moment est réduit en fonction de la vitesse de rotation.

4. Méthode selon une des revendications 1 à 3, **caractérisée en ce que** la valeur minimale prédéfinie de l'angle d'attaque est supérieure à 0,5° et inférieure à 5°.

**5.** Méthode selon la revendication 4, **caractérisée en ce que** la valeur prédéfinie de l'angle d'attaque est supérieure à 1° et inférieure à 3°.

**6.** Méthode selon une des revendications 1 à 5, **caractérisée en ce que** dans le premier segment (10) de la caractéristique, le moment augmente avec la vitesse de rotation, jusqu'à ce que la vitesse de rotation atteigne une valeur de vitesse de rotation prédéfinie ($n_1$).

**7.** Méthode selon une des revendications 1 à 6, **caractérisée en ce que** dans le deuxième segment (20) de la caractéristique, le moment augmente avec la vitesse de rotation plus rapidement que dans le premier segment.

**8.** Méthode selon une des revendications 1 à 7, **caractérisée en ce que** dans le troisième segment jusqu'à une vitesse de rotation prédéfinie ($n_5$) a lieu une régulation sur une valeur constante du moment de rotation.

**9.** Méthode selon la revendication 8, **caractérisée en ce que** dans le troisième segment de la caractéristique à partir de la vitesse de rotation ($n_5$) lorsque la vitesse de rotation augmente de façon croissante, le moment de rotation décroît.

**10.** Méthode selon une des revendications 1 à 9, **caractérisée en ce que** dans le cinquième segment (26) de la caractéristique, le moment de rotation augmente avec la vitesse de rotation plus rapidement que dans le premier segment (10).

**11.** Méthode selon une des revendications 1 à 10, **caractérisée en ce que** la troisième vitesse de rotation ($n_3$) est inférieure à la seconde vitesse de rotation ($n_2$).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1007844 A